# EUROPEAN PATENT APPLICATION

(11) **EP 2 472 686 A2**
(43) Date of publication of application: **04.07.2012**
(21) Application number: 11152007.8
(22) Date of filing: 25.01.2011
(51) Int. Cl.: H02G 11/02

(54) **Mouse device**

(30) Priority: 30.12.2010 TW 099146758
(71) Applicant: Giga-Byte Technology Co., Ltd., Taipei 231 (TW)
(72) Inventor: Chen, Shu-I, 231, Hsin Tien (TW); Ma, Mo-Ming, 231, Hsin Tien (TW); Shih, Po-Jen, 231, Hsin Tien (TW); Lai, Yen-Bo, 231, Hsin Tien (TW)
(74) Representative: Schwerbrock, Florian

(57) **Abstract**

A mouse device including a main body, a transmission cable set, and a pliable covering member is provided. The main body has a top portion, a bottom portion, and a necking portion interlaid between the top portion and the bottom portion. An orthogonal projection of the necking portion onto the bottom portion is located within the bottom portion, and an orthogonal projection of the necking portion onto the top portion is located within the top portion. The transmission cable set is wound around the body at the necking portion. The pliable covering member is arranged to surround the necking portion. The opening and closing of the pliable covering member with respect to the body signifies exposure or concealing of the transmission cable set wound around the necking portion.

## Description

### BACKGROUND OF THE INVENTION

### Field of the Invention

The present invention relates to a mouse device. More particularly, the present invention relates to a mouse device having a wire winding mechanism.

### Description of Related Art

Common mouse devices are provided with no space for accommodating the transmission cable set attached to them when the mouse devices are not in use, the unwound transmission cable set would cause awkwardness to the user during carrying it. Accordingly, additional cable winding mechanisms driven by gears or rollers are applied to some mouse devices for retracting the transmission cable set. However, the above mechanical design and members increases the manufacturing cost and is incapable of minimizing the volume of the mouse device. Furthermore, the cable winding mechanism is likely to be worn in long time using, or the cable winding mechanism may be failure to cause the cable being stuck or broken in the mouse device.

### SUMMARY OF THE INVENTION

The present invention provides a mouse device which provides better portability.

As embodied and broadly described herein, a mouse device including a main body, a transmission cable set, and a pliable covering member is provided. The main body has a top portion, a bottom portion and a necking portion interlaid between the top portion and the bottom portion, wherein an orthogonal projection of the necking portion to the bottom portion is located within the bottom portion, and an orthogonal projection of the necking portion to the top portion is located within the top portion. The transmission cable set is wound around the body along the necking portion. The pliable covering member is arranged to surround the necking portion, wherein the pliable covering member is adapted to be expanded or retracted in relative to the main body to cover or expose the transmission cable set wound around the necking portion.

In an embodiment of the present invention, an area of the orthogonal projection of the necking portion to the bottom portion is smaller than an area of the bottom portion, and an area of the orthogonal projection of the necking portion to the top portion is smaller than an area of the top portion, such that the top portion, the bottom portion and the necking portion form an annular groove of the main body.

In an embodiment of the present invention, the pliable covering member has a first side edge adjacent to the top portion, a second side edge adjacent to the bottom portion and a covering portion between the first side edge and the second side edge. The covering portion extends across the necking portion to cover the transmission cable set.

In an embodiment of the present invention, the first side edge of the pliable covering member is connected to the top portion; the second side edge of the pliable covering portion is movably attached to the bottom portion. The covering portion is adapted to be flipped in relative to the main body by moving the second side edge toward the first side edge.

In an embodiment of the present invention, the pliable covering member comprises a first part and a second part respectively pivoted on a side of the main body. The first part comprises a portion of the first side edge, a portion of the second side edge and a portion of the covering portion. The second part comprises another portion of the first side edge, another portion of the second side edge and another portion of the covering portion. The first part and the second part are adapted to rotate in relative to the main body along opposite directions to drive the portion of the covering portion of the first part and the other portion of the covering portion of the second part opening or closing in relative to the main body.

In an embodiment of the present invention, the transmission cable set comprises a cable and a connector. An end of the cable is connected to the main body, and the connector is connected to another end of the cable.

In an embodiment of the present invention, the main body further has an engaging portion. The connector is adapted to be engaged in the engaging portion as the cable is wound around the necking portion.

In an embodiment of the present invention, the engaging portion is located in a front end of the main body, and the cable stretches outside the main body by passing through the pliable covering member via the engaging portion.

In an embodiment of the present invention, the connector is a universal serial bus (USB) connector.

In an embodiment of the present invention, a material of the pliable covering member comprises rubber.

As to the above, the profile of the necking portion between the top portion and the bottom portion is smaller than the top portion and the bottom such that the transmission cable set can be wound around the necking portion. A space for accommodating the transmission cable set as the mouse device is not in using is obtained and the length of the transmission cable set can be adjust thereby. Furthermore, the pliable covering member disposed on the necking portion can be opened or closed to expose or cover the transmission cable set wound around the necking portion. As such, the appearance of the mouse device without using is simple and the portability of the mouse device is improved.

In order to make the aforementioned and other features and advantages of the invention more comprehensible, embodiments accompanying figures are described in detail below.

### BRIEF DESCRIPTION OF THE DRAWINGS

The accompanying drawings constituting a part of this specification are incorporated herein to provide a further understanding of the invention. Here, the drawings illustrate embodiments of the invention and, together with the description, serve to explain the principles of the invention.

FIG. 1A is a schematic view illustrating a mouse device according to an embodiment of the present invention;

FIG. 1B is a partial perspective view of the mouse device in FIG. 1A;

Fig. 1C is a schematic view of the mouse device of FIG. 1A in another condition;

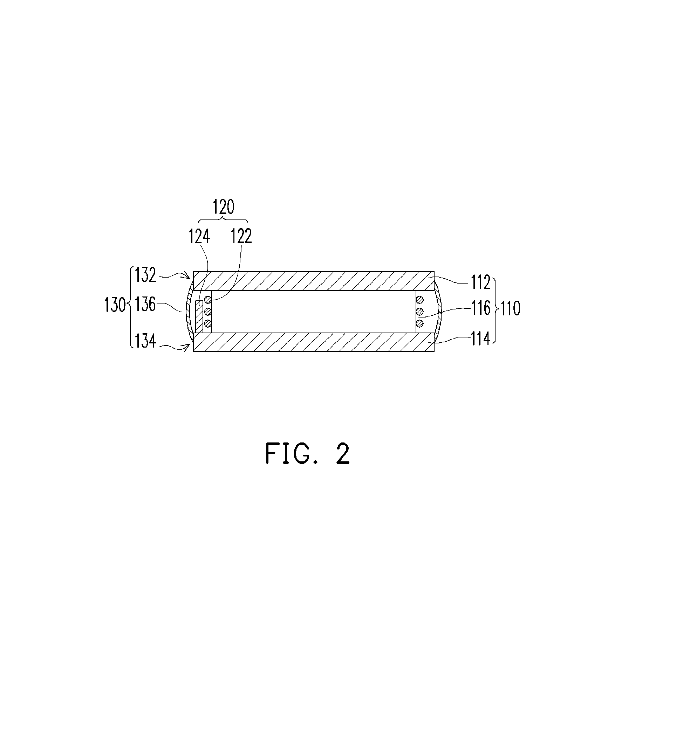

FIG. 2 is a cross-sectional view of the mouse device in FIG. 1A;

FIG. 3A is a schematic view illustrating a mouse device according to another embodiment of the present invention; and

FIG. 3B is a top view of the mouse device of FIG. 3A in another condition.

### DESCRIPTION OF EMBODIMENTS

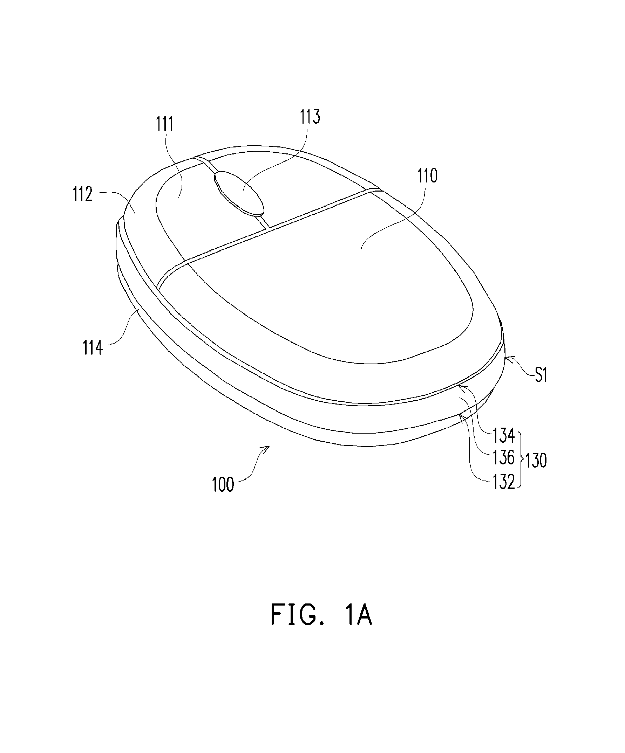

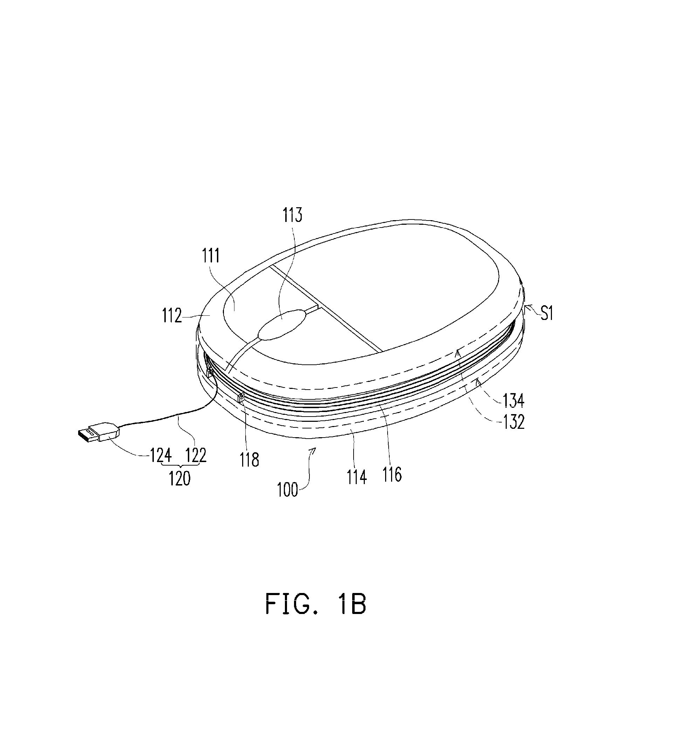

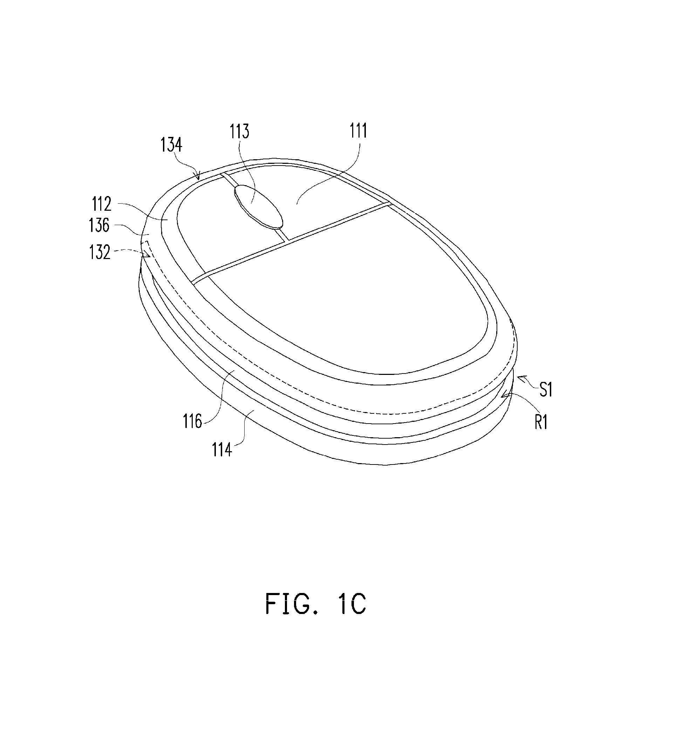

FIG. 1A is a schematic view illustrating a mouse device according to an embodiment of the present invention. FIG. 1B is a partial perspective view of the mouse device in FIG. 1A. FIG. 1C is a schematic view of the mouse device of FIG. 1A in another condition. Referring to FIGS. 1A through 1C, in the present embodiment, a mouse device 100 includes a main body 110, a transmission cable set 120, and a pliable covering member 130. The main body 110 has a top portion 112, a bottom portion 114 and a necking portion 116 interlaid between the top portion 112 and the bottom portion 114, wherein the main body 110 further has a press bottom 111 and a wheel 113 on the top portion 112, and the bottom portion 114 is adapted to lean against a platform (not shown) for users to operate the mouse device 100.

The transmission cable set includes a cable 122 and a connector 124, wherein the connector 124 may be an universal serial bus connector, for example. The cable 122 is wound around the main body 110 along the necking portion 116, an end of the cable 122 is connected to the main body 110, and another end of the cable 122 is connected to the connector 124. In addition, the pliable covering member 130 is arranged to surround the necking portion 116 of the main body 110 so as to cover or expose the transmission cable set 120 in the necking portion 116.

In the present embodiment, an orthogonal projection of the necking portion 116 to the bottom portion 114 is located within the bottom portion 114, and an orthogonal projection of the necking portion 116 to the top portion 112 is located within the top portion 112. Specifically, an area of the orthogonal projection of the necking portion 116 to the bottom portion 114 is smaller than an area of the bottom portion 114, and an area of the orthogonal projection of the necking portion 116 to the top portion 112 is smaller than an area of the top portion 112.

As such, the top portion 112, the bottom portion 114 and the necking portion 116 form an annular groove R1 on a side surface S1 of the main body 110. The transmission cable set 120 mentioned above can be wound and accommodated in the annular grove R1, and an user can adjust a length of the cable 122 exposed outside the main body 110 by controlling the wiring rounds of the cable 122 on the necking portion 116. The above design facilitates the user to operate the mouse device 100 depending on the instant circumstance.

Furthermore, a material of the pliable covering member 130 may be rubber, which covers the annular groove R1 for shielding the transmission cable set 130. On the other hand, in using the mouse device 100, the pliable covering member 130 can be flipped and the transmission cable set 120 can be drawn out from the annular groove R1.

Accordingly, the mouse device 100 is provided with the annular groove R1 on the main body 110, wherein the annular groove R1 is formed by the top portion 112, the bottom portion 114 and the necking portion 116 having a profile smaller than those of the top portion 112 and the bottom portion 114, and the transmission cable set 120 can be wound and accommodated in the annular groove R1. By which, the transmission cable set 120 can be retrieved in the main body 110 when the mouse device 100 is not in using, such that the mouse device 100 is easy to be carried without the inconvenience cause by drop of the transmission cable set 120.

In an embodiment of the present invention, the pliable covering member 130 has a first side edge 132 adjacent to the top portion 112, a second side edge 134 adjacent to the bottom portion 114 and a covering portion 116 between the first side edge 132 and the second side edge 134, wherein the covering portion 136 extends across the necking portion 116 to cover the transmission cable set 120.

Specifically, In an embodiment of the present invention, the first side edge 132 of the pliable covering member 120 is connected to the top portion 112 of the main body 110, the second side edge 134 of the pliable covering portion 120 is movably attached to the bottom portion 114 of the main body 110. Therefore, the covering portion 136 of the pliable covering member 130 is adapted to be flipped in relative to the main body 110 by moving the second side edge 134 toward the first side edge 132 as shown in 1C, so as to expose the annular groove R1 and the transmission cable set 120 wound thereon.

Furthermore, referring to FIG. 1B, in the present embodiment, the main body 110 further has an engaging portion 118 located on the bottom portion 114 for engaging the connector 122 after the cable 122 is wound around the necking portion 116. Moreover, the engaging portion 118 is located in a front end of the main body 110, and the cable 122 can stretch outside the main body 110 by passing through the pliable covering member 120 via the engaging portion 118. Thus, when the mouse device 100 is in using, the engaging portion 118 can further be used to engage the cable 122 after adjusting the length of the cable 122. The structure and the position of the engaging portion 118 are not limited herein, and can be amended according to requirements in using the mouse device 100.

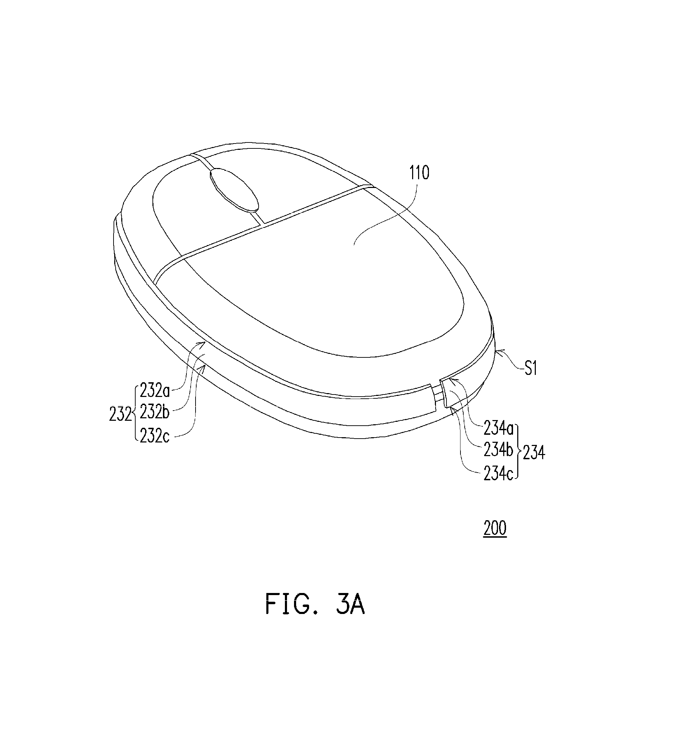

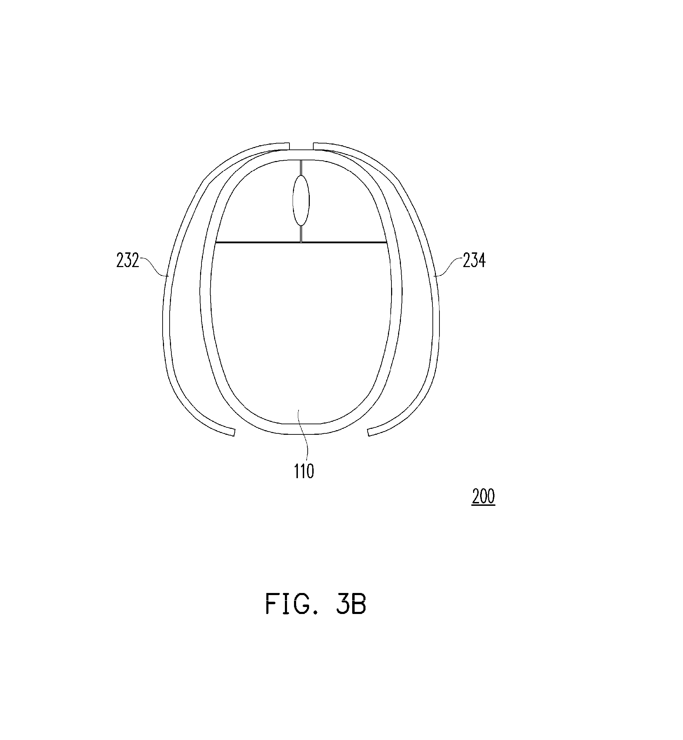

The present invention provides no restriction on the opening and closing manners of the pliable covering member in relative to the main body. FIG. 3A is a schematic view illustrating a mouse device according to another embodiment of the present invention. FIG. 3B is a top view of the mouse device of FIG. 3A in another condition. Referring to FIGS. 3A and 3B, in different to the above embodiment, the pliable covering member 230 of the mouse device 200 includes a first part 232 and a second part 234, wherein the first part 232 is pivoted on a side of the main body 110, and the first part 232 comprises a portion 232a of a first side edge, a portion 232b of a covering portion and a portion 232c of a second side edge.

In addition, the second part 234 is pivoted on the main body 110 and located on the same side of the main body 110 with the first part 232. The second part 234 comprises another portion 234a of a first side edge, another portion 234b of a covering portion and another portion 234c of a second side edge. In other words, the pliable covering member 230 is divided into the first part 232 and the second part 234 respectively pivoted on the main body 110. As such, the first part 232 and the second part 234 are adapted to rotate in relative to the main body 110 along opposite directions to drive the portion 232b of the covering portion of the first part 232 and the other portion 234b of the covering portion of the second part 234 opening or closing in relative to the main body 110. The above design allows the pliable covering member 230 to achieve the effect of covering or exposing the transmission cable set 120 as mentioned above.

In summary, according to the above embodiments, the profile of the necking portion between the top portion and the bottom portion is smaller than the top portion and the bottom such that the transmission cable set can be wound around the necking portion. A space for accommodating the transmission cable set as the mouse device is not in using is obtained and the length of the transmission cable set can be adjust thereby.

Furthermore, the pliable covering member disposed on the necking portion can be opened or closed to expose or cover the transmission cable set wound around the necking portion. As such, the appearance of the mouse device without using is simple and the portability of the mouse device is improved.

Although the invention has been described with reference to the above embodiments, it will be apparent to one of the ordinary skill in the art that modifications to the described embodiment may be made without departing from the spirit of the invention. Accordingly, the scope of the invention will be defined by the attached claims not by the above detailed descriptions.

## Claims

1. A mouse device, comprising:
a main body having a top portion, a bottom portion and a necking portion interlaid between the top portion and the bottom portion, wherein an orthogonal projection of the necking portion onto the bottom portion is located within the bottom portion, and an orthogonal projection of the necking portion to the top portion is located within the top portion;
a transmission cable set, wound around the body at the necking portion; and
a pliable covering member, arranged to surround the necking portion, wherein the opening and closing of the pliable covering member with respect to the main body signifies exposure or concealing of the transmission cable set wound around the necking portion.

2. The mouse device as claimed in claim 1, wherein an area of the orthogonal projection of the necking portion to the bottom portion is smaller than an area of the bottom portion, and an area of the orthogonal projection of the necking portion to the top portion is smaller than an area of the top portion, such that the top portion, the bottom portion and the necking portion form an annular groove of the main body.

3. The mouse device as claimed in claim 1, wherein the pliable covering member has a first side edge adjacent to the top portion, a second side edge adjacent to the bottom portion and a covering portion between the first side edge and the second side edge, and the covering portion extends across the necking portion to cover the transmission cable set.

4. The mouse device as claimed in claim 3, wherein the first side edge of the pliable covering member is connected to the top portion, the second side edge of the pliable covering portion is movably attached to the bottom portion, and the pliable covering portion drives the covering portion to lift in relative to the main body by moving the second side edge toward the first side edge.

5. The mouse device as claimed in claim 3, wherein the pliable covering member comprises:
a first part, pivoted on a side of the main body, the first part comprising a portion of the first side edge, a portion of the second side edge and a portion of the covering portion;,
wherein the first part is adapted to rotate in relative to the main body to drive the portion of the covering portion of the first part opening or closing in relative to the main body.

6. The mouse device as claimed in claim 5, wherein the pliable covering member further comprises:
a second portion pivoted on the side of the main body, the second part comprises another portion of the first side edge, another portion of the second side edge and another portion of the covering portion, wherein the first part and the second part are adapted to rotate in relative to the main body along opposite directions to drive the portion of the covering portion of the first part and the other portion of the covering portion of the second part opening or closing in relative to the main body.

7. The mouse device as claimed in claim 1, wherein the transmission cable set comprises:
a cable, having an end connected to the main body; and
a connector, connected to another end of the cable.

8. The mouse device as claimed in claim 7, wherein the main body further has an engaging portion for engaging the connector as the cable is wound around the necking portion.

9. The mouse device as claimed in claim 8, wherein the engaging portion is located in a front end of the main body, and the cable stretches outside the main body by passing through the pliable covering member via the engaging portion.

10. The mouse device as claimed in claim 7, wherein the connector is a universal serial bus connector.

11. The mouse device as claimed in claim 1, wherein the pliable covering member is made of rubber.
